Europäisches Patentamt

European Patent Office

Office européen des brevets

(11) Veröffentlichungsnummer: **0 182 314 B1**

## (12) EUROPÄISCHE PATENTSCHRIFT

(45) Veröffentlichungstag der Patentschrift: **22.01.92**

(51) Int. Cl.⁵: **B60V 3/06**

(21) Anmeldenummer: **85114553.2**

(22) Anmeldetag: **15.11.85**

(54) **Katamaran-Luftkissenwasserfahrzeug.**

(30) Priorität: **16.11.84 DE 3442044**

(43) Veröffentlichungstag der Anmeldung:
**28.05.86 Patentblatt 86/22**

(45) Bekanntmachung des Hinweises auf die
Patenterteilung:
**22.01.92 Patentblatt 92/04**

(84) Benannte Vertragsstaaten:
**DE FR GB NL SE**

(56) Entgegenhaltungen:
**FR-A- 2 063 484**   **GB-A- 1 253 382**
**GB-A- 1 286 091**   **US-A- 3 548 776**
**US-A- 3 559 608**   **US-A- 4 228 752**

**NAVAL ENGINEERS JOURNAL, Band 82, Nr.
2, April 1970, Seiten 32-38, US; L.D. CHIRILLO:
"A shipbuilder's view of T-AGOR 16"**

**Combat Craft, March 1984, page 46-48**

(73) Patentinhaber: **Schlichthorst, Norbert
Osterberg 7
W-2151 Beckdorf(DE)**

Patentinhaber: **Mangelsdorf, Wolfgang
Helvetierweg 7a
W-2000 Hamburg 61(DE)**

(72) Erfinder: **Schlichthorst, Norbert
Osterberg 7
W-2151 Beckdorf(DE)**
Erfinder: **Mangelsdorf, Wolfgang
Helvetierweg 7a
W-2000 Hamburg 61(DE)**

(74) Vertreter: **Dipl.-Phys.Dr. Manitz Dipl.-Ing.,
Dipl.-W.-Ing. Finsterwald Dipl.-Ing. Grämkow
Dipl.-Chem.Dr. Heyn Dipl.-Phys. Rotermund
Morgan, B.Sc.(Phys.) Robert-Koch-Strasse 1
W-8000 München 22(DE)**

## Beschreibung

Die Erfindung betrifft ein Katamaran-Luftkissenwasserfahrzeug nach dem Oberbegriff des Patentanspruchs 1.

Bei einem bekannten Katamaran-Luftkissenwasserfahrzeug dieser Art (Combat Craft März 1984, Seiten 46 bis 48) befindet sich der die Erweiterung nach innen aufweisende und die Hauptantriebsaggregate aufnehmende obere Schwimmerbereich größtenteils unterhalb der Verdrängerfahrt-Wasserlinie, so daß die bei Verdrängerfahrt zwischen den Schwimmern einströmenden Wassermassen stark eingeschnürt werden, was zu einem erheblichen Fahrtwiderstand in der Verdrängerfahrt führt.

Die Verdrängerfahrt kann daher bei einem derart ausgebildeten Katamaran-Luftkissenwasserfahrzeug lediglich als ein letztlich unerwünschter Fahrtzustand angesehen werden, der beispielsweise nur bei Hafenmanövern oder im Notfall verwendet wird. Aufgrund der tiefen Anordnung der aus dem Aufnahmeaufsatz mit dem Übergangsbereich gebildeten Erweiterung ist auch der Freiraum zwischen der Wasseroberfläche bei Verdrängerfahrt und der Decksstruktur so gering, daß schon bei schwachem Seegang durch Wellenschläge zusätzlich ungünstige Bedingungen für die Verdrängerfahrt vorliegen.

Schließlich ist die Höhe des Luftkissens bei der Luftkissenfahrt vergleichsweise gering, was zu einem relativ harten und wenig elastischen Fahrverhalten bei Luftkissenfahrt führt. Aufgrund der knapp oberhalb der Luftkissenfahrt-Wasserlinie vorliegenden, unter einem relativ großen, flachen Winkel nach innen und oben ansteigenden Innenflächen der Schwimmer ist darüber hinaus die Stabilität des bekannten Katamaran-Luftkissenwasserfahrzeuges im Falle von Krängungen unzureichend, weil sich der vom Luftkissen erzeugte Auftriebsschwerpunkt aufgrund dieser schrägen Innenflächen zu der bereits stärker angehobenen Seite des Luftkissenwasserfahrzeugs hin verlagert, und somit ein zusätzliches, deutliches Krängungsmoment erzeugt.

Das Ziel der vorliegenden Erfindung besteht darin, ein Katamaran-Luftkissenwasserfahrzeug der eingangs genannten Gattung zu schaffen, mit dem auch eine gleichberechtigte und insbesondere widerstandsarme sowie ruhige Verdrängerfahrt möglich ist, wobei gleichzeitig die Fahrverhältnisse, insbesondere die Stabilität und das Dämpfungsverhalten bei der Luftkissenfahrt verbessert sind.

Zur Lösung dieser Aufgabe sind die Merkmale des kennzeichnenden Teils des Anspruches 1 vorgesehen.

Erfindungsgemäß liegt also der die aus dem Aufnahmeaufsatz mit dem Übergangsbereich gebildete Erweiterung aufweisende obere Schwimmerbereich oberhalb der Verdrängerfahrt-Wasserlinie, so daß die in diesem Bereich vorhandene Einschnürung der Fläche zwischen den beiden Schwimmern nicht vom Fahrwasser durchströmt wird und somit keine entsprechende Widerstandserhöhung vorhanden ist. Vielmehr befinden sich auch bei Verdrängerfahrt nur die relativ schmal ausgebildeten, unterhalb der Erweiterung bzw. des Aufnahmeaufsatzes befindlichen Schwimmerbereich, d.h. die unteren Verdrängungs-Schwimmerbereiche der beiden Schwimmer im Fahrwasser.

Durch die stufenartige Erweiterung im Übergangsbereich des Aufnahmeaufsatzes oberhalb des unteren Verdrängungs-Schwimmerbereiches nach innen wird ein besonders gut für die Unterbringung der bevorzugt als Container ausgebildeten Hauptantriebsaggregate geeigneter Raum geschaffen.

Dabei erweist es sich weiter als vorteilhaft, daß die erst oberhalb der Verdrängerfahrt-Wasserlinie die Hauptantriebsaggregate aufnehmenden Aufnahmezusätze der Schwimmer deutlich höher als nach dem Stand der Technik sind, so daß auch der Freiraum oder Luftraum zwischen der Verdrängerfahrt-Wasserlinie und der Unterseite der Decksstruktur vergrößert ist. Hierdurch wird das Seegangsverhalten des Katamaran-Luftkissenwasserfahrzeuges bei der Verdrängerfahrt wesentlich begünstigt, weil nunmehr sehr viel höhere Wellen bei starkem Seegang unter der Decksstruktur hindurchlaufen können. Es können so auch noch bei relativ starkem Seegang in Verdrängerfahrt vergleichsweise hohe Geschwindigkeiten gefahren werden. Bei Luftkissenfahrt bewirkt das deutlich höhere Luftkissen eine weichere Federung des Wasserfahrzeuges auf dem Luftkissen.

Da die unteren Verdrängungs-Schwimmerbereiche wegen der Versetzung der Erweiterung, also des Übergangsbereiches des Aufnahmeaufsatzes nach oben relativ schmal ausgebildet sein können, ist die Verschiebung des Luftkissen-Auftriebsschwerpunktes bei Krängungen des Wasserfahrzeuges in Luftkissenfahrt deutlich geringer, so daß auch die Stabilität des Katamaran-Luftkissenwasserfahrzeuges in der Luftkissenfahrt verbessert ist.

Sofern das erfindungsgemäße Katamaran-Luftkissenwasserfahrzeug als Kampfschiff verwendet wird, bildet die Möglichkeit, das Wasserfahrzeug durch Übergang von der Luftkissenfahrt in die Verdrängerfahrt bei Aufrechterhaltung eines sowohl von der Manöverierfähigkeit, der Wirtschaftlichkeit, der Stabilität und des Fahrkomforts einwandfreien Fahrverhaltens deswegen einen besonderen Vorteil, weil das Wasserfahrzeug dann aus der Ferne schwerer ortbar ist.

Für die Sicherheit des Wasserfahrzeugs ist die stufenartige Erweiterung der Schwimmer im Übergangsbereich der Aufnahmeaufsätze oberhalb der Verdrängerfahrt-Wasserlinie von besonderer Bedeutung, da hierdurch nicht nur sehr viel Platz für die Unterbringung von Antriebsaggregaten und weiterer Vorrichtungen geschaffen wird, sondern hier auch gleichzeitig ein ganz erheblicher Reserveauftrieb vorliegt, der sich bei starkem Seegang und auch im Falle der Beschädigung des Unterwasserteils der Schwimmer, d.h. der Verdrängungs-Schwimmerbereiche vorteilhaft auswirkt.

Erfindunggemäß ist der Hub zwischen Verdränger- und Luftkissenfahrt wesentlich geringer als die Gesamthöhe der Schwimmer. Die stufenartige Erweiterung in Form des Übergangsbereiches des Aufnahmeaufsatzes im oberen Beeich der Schwimmer auf deren Innenseite ist der Form nach ein zusätzlicher halber Bootsrumpf vom Knickspanttyp.

Die erfindungsgemäße Anordnung des über den Übergangsbereich stufenartige nach innen erweiterten Aufnahmeaufsatzes oberhalb der Verdrängerfahrt-Wasserlinie hat ferner den Vorteil, daß beim Übergang aus der Verdrängerfahrt in die Luftkissenfahrt zunächst kein so großer Widerstand zwischen den Schwimmern überwunden werden muß. Die relativ schmalen Verdrängungs-Schwimmerbereiche bieten in Fahrtrichtung selbst nur eine vergleichsweise geringe Verdrängerfläche und auch zwischen den Schwimmern kann das Wasser ohne weitere Einschränkungen hindurchströmen. Dies führt beim Beschleunigungsvorgang dazu, daß hierfür einerseits eine geringere Leistung ausreicht und andererseits höhere Beschleunigungswerte erzielt werden, was insbesondere für Kampfschiffe von Bedeutung ist.

Ein weiterer Vorteil der Erfindung besteht darin, daß beispielsweise ein gemäß der Erfindung aufgebautes Kampf-Schnellboot in kürzester Zeit auf eine andere Betriebsweise z.B. als Minenkampfboot oder Minensuchboot umgerüstet werden kann, wobei häufig eine Gewichtszunahme von 100 bis 200 t berücksichtigt werden muß. Hier wirkt sich der durch den sprungartig erweiterten Aufnahmeaufsatz bedingte, bei geringer Tiefgangszunahme wirksam werdende hohe Reserveauftrieb der Schwimmer günstig aus, denn durch ein bei Gewichtserhöhung geringfügig tieferes Eintauchen der Schwimmer können höhere Gewichte auf einfachste Weise aufgenommen werden, ohne daß die Schwimmlage des Wasserfahrzeuges bei Verdrängerfahrt substantiell verändert wird. Der Abstand der Wasserlinie von der Decksstruktur bleibt also auch bei erheblich zunehmender Belastung der Decksstruktur weitgehend unverändert. Der starke Reserveauftrieb des sprungartig erweiterten Aufnahmeaufsatzes oberhalb der Verdrängerfahrt-Wasserlinie hat also weiter den Vorteil, daß das Wasserfahrzeug auch bei stark schwankenden Gewichten der Decksstruktur bzw. der darauf angeordneten Geräte weitgehend die gleichen Verdrängerfahrt-Eigenschaften beibehält.

Im unteren Verdrängungs-Schwimmerbereich kann Treibstoff oder Wasser untergebracht werden.

Besonders zweckmäßig ist es, wenn sich der Aufnahmeaufsatz nach Anspruch 2 fast über die gesamte Schiffslänge erstreckt und außer den Hauptantriebsaggregaten auch noch weitere Aggregate, wie Ventilatorantriebsaggregate, Elektrogeneratoren, Klimaanlagen, Wasseraufbereitungsanlagen, aufnimmt.

Aus Gründen einer einwandfreien Trimmung sollen die Hauptantriebsaggregate nach Anspruch 3 der halben Schiffslänge angeordnet sein. Dies ist aufgrund der erfindungsgemäßen Unterbringung der Antriebsaggregate im oberen Bereich der Schwimmer, also im Aufnahmeaufsatz, ohne weiteres zu realisieren. Zu diesem Zweck besitzt der Aufnahmenahmeaufsatz seine größte Breite zweckmäßigerweise bei der halben Schiffslänge.

Aus Gründen eines günstigen Seegangverhaltens und der Aufrechterhaltung hoher Geschwindigkeiten bei Verdrängungsfahrt auch im Falle starken Seeganges sieht die Erfindung nach einer besonders bevorzugten Ausführungsform gemäß Anspruch 4 vor, daß der Aufnahmeaufsatz sich von der größten Breite nach vorn stetig, vorteilhafterweise linear verschmälert und schließlich nicht mehr stufenartig, sondern stetig in den Verdränger-Schwimmerbereich übergeht.

Zur Schaffung von viel Reserveauftrieb und viel Unterbringungsraum soll aber der Aufnahmeaufsatz die größte Breite gemäß Anspruch 5 nach hinten im wesentlichen beibehalten.

Eine vorteilhafte praktische Ausführungsform nach Anspruch 6 kennzeichnet sich dadurch, daß bei der halben Schiffslänge die Höhe des Aufnahmeaufsatzes das 0,8- bis 1,2-fache der Höhe des Verdrängungs-Schwimmerbereichs beträgt und vorteilhafterweise annähernd gleich der Höhe des Verdrängungs-Schwimmerbereichs ist, so daß bei Verdrängerfahrt oberhalb der Wasserlinie bis zur Decksstruktur ein dem Tiefgang entsprechender Freiraum vorliegt.

Ein sehr günstiger Reserveauftrieb verbunden mit viel zusätzlichem Unterbringungsraum ergibt sich entsprechend den Ansprüchen 7 und 8 dadurch, daß bei der halben Schiffslänge die Breite jedes Schwimmers am Übergang vom Verdrängungs-Schwimmerbereich zum Aufnahmeaufsatz im wesentlichen, stufenartig um 30 bis 70%, vorteilhafterweise um 40 bis 60%, insbesondere 50% und bevorzugt über leicht gerundete oder schräge Übergangsbereiche von geringer Höhe zum Ableiten des Wassers bei Wellenschlag nach innen, zunimmt. Die Übergangsbereiche erstrecken sich dabei über einen sehr geringen Tiefgangsbereich.

Eine weitere Ausführungsform nach Anspruch 9 ist so ausgebildet, daß die Schwimmer sich außen im wesentlichen stetig und bevorzugt in kleinen Stufen verbreitern. Die Stufen dienen der Verminderung der benetzten Fläche und somit des Widerstandes.

Weiter ist es vorteilhaft, wenn der Übergangsbereich vom Verdrängungs-Schwimmerbereich zum Aufnahmeaufsatz gemäß Anspruch 10 unter einem Winkel von 20 bis 40°, besonders vorteilhaft etwa 30° zur Horizontalen verläuft, was dem weicheren Einsetzen im Seegang dient.

Von besonderer Bedeutung ist es, daß die Innenwände der Schwimmer, wie im Anspruch 11 angegeben, von vorn bis achtern im wesentlichen parallel zueinander verlaufen. Während also die äußere Bordwand einen in Längsrichtung gekrümmten Verlauf aufweist, sollen die Schwimmer innen in erster Näherung parallele Bordwände besitzen, um eine gegenseitige Beeinflußung durch die Schwimmer gering zu halten und eine Einschnürung der zwischen letzteren hindurchlaufenden Wassermassen zu vermeiden. Die Schwimmer stellen einen sehr schlanken Rumpf mit parallelen Linien auf mindestens zwei Drittel der Gesamtlänge dar.

Bei der Alternativausführung nach Anspruch 12 ist das teilweise Zusammenlaufen der Innenwände so gering, daß dadurch keine merkliche Widerstandszunahme eintritt. Hierdurch wird eine zu starke Ausbauchung der Schwimmer auf den Außenseiten vermieden.

Die Rumpferweiterung im oberen Bereich der Schwimmer auf der Innenseite ist der Form nach ein zusätzlicher halber Bootsrumpf vom Knickspanttyp.

Eine weitere vorteilhafte Ausführungsform gemäß Anspruch 13 ist so ausgebildet, daß die Kiellinie der Schwimmer von vorn nach achtern leicht, und zwar bevorzugt unter einem Winkel von 1 bis 3°, insbesondere etwa 2° linear ansteigt. Hierdurch kann der durch eine Verbreiterung der Schwimmer im hinteren Bereich erzielte höhere Auftrieb zur Erreichung einer horizontalen Schwimmlage kompensiert werden.

Für die Sicherheit des Schiffes von besonderer Bedeutung ist es, daß gemäß einer weiteren vorteilhaften Ausführungsform nach den Ansprüchen 14 und 15 die Schwimmer durch mindestens ein, bevorzugt jedoch durch mehrere Decks in gegeneinander abgedichtete Auftriebskammern unterteilt sind. Insbesondere soll sich ein Deck im Übergangsbereich vom Verdrängungs-Schwimmerbereich zum Aufnahmeaufsatz der Schwimmer befinden, wodurch als weiterer Vorteil ein Zwischenboden zum Befestigen der Hauptantriebsaggregate u.a. geschaffen wird.

Wird jetzt einer der Schwimmer im Unterwasserbereich z.B. durch eine Minenexplosion oder dergleichen verletzt und damit undicht, so übernehmen die Schwimmer im Bereich der Aufnahmeaufsätze die Schwimmerfunktion, und das Fahrzeug bleibt noch voll schwimm- und manövrierfähig.

Von besonderem Vorteil ist eine Anordnung gemäß Anspruch 16, wobei die Hauptantriebsaggregate und ggfs. auch die Ventilatorantriebsaggregate als Container ausgebildet sind, die mit ihrer Oberseite an die Decksstruktur angehängt und mit ihrer Unterseite lediglich seitlich und in Längsrichtung an der Struktur der Schwimmer abgestützt sind.

Der Auftriebseffekt des Luftkissens kann ohne Erhöhung der Energiezufuhr wesentlich verbessert werden, wenn nach Anspruch 17 gemäß einer weiteren Ausführungsform der Erfindung die Auspuffleitungen der Verbrennungsmotoren der Hauptantriebsaggregate und insbesondere auch der Ventilatorantriebsaggregate sowie bevorzugt auch etwaiger Generatoren in dem von den Schwimmern und den Schürzen eingegrenzten Raum, insbesondere in dem bei Verdrängerfahrt oberhalb der Wasseroberfläche befindlichen Luftraum münden, wobei der Luftkissendruck kleiner oder gleich dem Abgasdruck der angeschlossenen Verbrennungsmotoren ist. Dadurch können ferner die Auspuffleitungen besonders kurz gehalten werden.

Der Abgasdruck der vorzugsweise als Dieselmotoren ausgebildeten Verbrennungsmotoren der verschiedenen Antriebsaggregate wird somit in vorteilhafter Weise zusätzlich noch zur Schaffung des Luftkissens mit herangezogen. Dies ist deswegen möglich, weil der Abgasdruck normaler Dieselmotoren in der Größenordnung von 1.800 mm Wassersäule liegt, was größer ist als der im allgemeinen im Luftkissen vorhandene Auftriebsdruck.

Grundsätzlich können sämtliche Verbrennungsmotoren in dieser Weise an den Luftraum innerhalb der Schwimmer angeschlossen sein. In erster Linie sind es aber lediglich die der beiden Hauptantriebsaggregate.

Durch die Erfindung wird aber nicht nur der Abgasdruck, sondern insbesondere auch das aus den Verbrennungsmotoren austretende Abgasvolumen für die Schaffung des Luftkissens mit herangezogen. Insgesamt kann auf diese Weise die Hubkapazität des Luftkissens um etwa 10 % erhöht werden.

Ein durch die erfindungsgemäße Abgasführung erzielter weiterer und gerade bei Kampfschiffen besonders wichtiger Vorteil besteht darin, daß die Abgase vor dem Austritt aus der Heckschürze durch Vermischung mit Luft und auch Wassergischt stark abgekühlt werden. Hierdurch wird die Infrarotabstrahlung erheblich reduziert und somit die Ortung eines derartigen Schiffes aufgrund von Infrarotabstrahlung wesentlich erschwert. Auch der Wegfall der Abgasführungen durch die Decksstruktur stellt einen deutlichen Vorteil dieser Ausführungsform dar.

Das Münden der Auspuffleitungen oberhalb der Wasserlinie ist bevorzugt, da hierdurch weniger Körperschall auf den Wasserkörper übertragen wird, wodurch eine Sonarortung des Wasserfahrzeuges erschwert wird.

Es sind bereits Katamaran-Wasserfahrzeuge mit innen an den Schwimmern angeordneten Stabilisatorflossen bekannt (DE-OS 23 12 488), die bei einer Anordnung nach den Ansprüchen 18 bis 20 nicht nur eine dynamische Stabilisierung des Wasserfahrzeuges erzielen, ohne daß die hierfür erforderlichen Flossen der Gefahr von Beschädigungen insbesondere beim Manövrieren im Hafen ausgesetzt sind, sondern darüberhinaus auch zusätzliche Effekte herbeiführen.

So sind im unteren Endbereich der Schwimmer innen um Querachsen verschwenkbare Stabilisatorflossen angeordnet, welche so gesteuert werden, daß sie den Übergang von der Verdrängerfahrt in die Luftkissenfahrt und/oder die Überschreitung eines kritischen Geschwindigkeitsbereiches bei Luftkissenfahrt mit höheren Geschwindigkeiten unterstützen. Insbesondere soll vorne ein Paar von Stabilisatorflossen vorgesehen sein. Auch im achterlichen Bereich des Schiffes können gegebenenfalls Stabilisatorflossen vorgesehen werden.

Dadurch, daß die Stabilisatorflossen sich nach innen in den Raum zwischen den Katamaran-Schwimmern erstrecken, bewegen sie sich zum einen in gleichmäßiger strömendem Wasser, während zum anderen die Beschädigungsgefahr erheblich herabgesetzt ist. Die Steuerung erfolgt nicht nur zur Nickdämpfung sondern besonders auch als Auftriebsbeihilfe beim Übergang von Verdrängungsfahrt in die Luftkissenfahrt. Hierdurch können die Hubtriebwerke entlastet werden, und es wird zusätzlich zur Ausnutzung des Abgasdrucks der Dieselmotoren eine Leistungseinsparung möglich gemacht.

Als besonders günstig erweist sich die Kombination des Luftkissens mit einem gewissen Auftrieb der als Tragflügel ausgebildeten Stabilisatorflossen.

Die Stabilisatorflossen erweisen sich auch als günstig, wenn ein etwa bei 25 Knoten liegender kritischer Geschwindigkeitsbereich der Luftkissenfahrt überschritten werden soll. Durch Steuerung insbesondere der achterlichen Stabilisatorflossen kann dieser kritische Geschwindigkeitsbereich mit einem geringeren Energieaufwand überwunden werden.

Eine besonders günstige Stabilisatorflossen-Anordnung kennzeichnet sich dadurch, daß im ersten Drittel ein Paar sowie im ersten Viertel und im letzten Viertel der Schwimmer - von vorn nach achtern gesehen - zwei Stabilisatorflossenpaare vorgesehen werden.

Die Steuerung der Stabilisatorflossen erfolgt in erster Linie so, daß die zur Stabilisierung der Schiffsbewegungen hervorgerufenen Ausschläge der Stabilisatorflossen sich mit den Ausschlägen überlagern, die zum Herausheben des Schiffskörpers beim Übergang in die Luftkissenfahrt benötigt werden oder zur Erzielung eines gewissen Dauerauftriebs.

Die Stabilisierung mittels der Stabilisatorflossen ist in erster Linie für den Luftkissenbetrieb vorgesehen, kann erfindungsgemäß aber auch in zweckmäßiger Weise die Verdrängerfahrt wesentlich ruhiger und stabiler gestalten.

In den Ansprüchen 21 bis 24 sind besonders vorteilhafte Anordnungen für das Katamaran-Luftkissenwasserfahrzeug beschrieben, bei dem an der Decksstruktur zwischen den Schwimmern eine am unteren Ende eine Sonarvorrichtung tragende, teleskopisch auf- und abfahrbare Säule angeordnet ist, deren unteres Ende sowohl bei Luftkissenfahrt unter die Wasseroberfläche eintauchbar ist als auch sich bei Verdrängerfahrt immer unter Wasser befindet. Bei Verdrängungsfahrt befindet sich also die Sonarvorrichtung ständig in ihrer Wirkposition etwas unter der Verdrängerfahrt-Wasserlinie. Lediglich bei Luftkissenfahrt tritt die Sonarvorrichtung aus der Wasseroberfläche aus, kann dann jedoch durch Ausfahren der teleskopartigen Säule wieder in ihre Betriebsstellung gebracht werden.

Durch Stabilisierungsflossen im unterhalb der Verdrängerfahrt-Wasserlinie liegenden Bereich der eingefahrenen Säule wird diese zusätzlich noch als stabilisierendes Element genutzt. Besonders vorteilhaft ist dabei eine Dreipunktabstützung in Verbindung mit den beweglichen Stabilisierungsflossen, wobei jedoch die Stabilisierungsflossen-Anordnung am unteren Ende der Säule im allgemeinen nicht verstellbar ist, also eine reine statische Stabilisierungsfunktion ausübt.

Um in unterschiedliche Richtungen senden oder aus unterschiedlichen Richtungen empfangen zu können, ist die Sonarvorrichtung zweckmäßig im Winkel verstellbar.

Weiter ist es zweckmäßig, wenn der Hub der Sonarvorrichtung größer als die Höhendifferenz zwischen Verdränger- und Luftkissenfahrt ist, und zwar vorteilhafterweise um 40 bis 60 %, insbesondere etwa 50 % größer. Auf diese Weise können unterschiedliche Tiefen der Sonarvorrichtung unterhalb der Wasseroberfläche eingestellt werden, so daß eine optimale Anpassung an die Erfordernisse eines bestimmten Sonarschwingers möglich ist.

Die Säule soll in der Mitte zwischen den Schwimmern angeordnet sein, wodurch die Kursstabilität beeinträchtigende Momente auf das in Fahrt befindliche Schiff wirksam vermieden werden.

Das Sonargerät kann erfindungsgemäß aktiv oder passiv sein. Die Stabilisierungsflossen-Anordnung kann aus einem Tragflächenprofil bestehen, das insgesamt auch rund ausgebildet sein kann. Der Sonarschwinger kann entweder zwischen den Tragflügeln sitzen oder auch in das gegebenenfalls runde Tragflächenprofil eingebaut sein.

Die Säule soll für den jeweiligen Betriebszustand so wenig wie möglich unter die Wasseroberfläche eingetaucht sein, um den Fahrtwiderstand so wenig wie möglich zu beeinträchtigen.

Die Sonarvorrichtungen werden für die U-Boot- und Minenjagd verwendet. Die Anordnung zwischen den Schwimmern ist besonders auch deswegen von Vorteil, weil die Einzelrümpfe bzw. Schwimmer für einen Bug- oder Rumpfeinbau zu schlank sind.

Während eine konventionelle Sonarvorrichtung eine Hubhöhe von 3 bis 4 m erfordert, wodurch auch die Stabilität der entsprechend auszubildenden längenveränderlichen Säule beeinträchtigt wird, kann man erfindungsgemäß mit einer wesentlich geringeren Hubhöhe auskommen, die lediglich zum Ausgleich der Höhenvariation zwischen Verdrängerfahrt und Luftkissenfahrt ausreicht. Entscheidend ist hierbei, daß bei Verdrängerfahrt die Sonarvorrichtung ständig im Wasser eingetaucht bleibt. Hierdurch kommt man mit einer geringeren Hubhöhe aus.

Während bei Verdrängerfahrt die Geschwindigkeit um die 20 kn herum liegt, kann die Schiffsgeschwindigkeit bei Luftkissenbetrieb bis zu 40 kn betragen.

Hierbei ist die Einziehbarkeit des Sonargerätes zur Widerstandsherabsetzung von besonderer Bedeutung.

Einen besonderen Nachteil von bekannten Katamaran-Luftkissenfahrzeugen stellt es dar, daß die vorn und achtern vorgesehenen Schürzen zur Eingrenzung des Luftkissen-Luftraums bei Verdrängerfahrt ständig in die Wasseroberfläche eingetaucht sind. Hierdurch wird der Fahrtwiderstand in der Verdrängerfahrt ganz beträchtlich erhöht und die Schürzen nutzen sich sehr schnell ab. Dies gilt auch für ein Katamaran-Luftkissenwasserfahrzeug, bei dem die Schürzen schwenkbar und auf der Wasseroberfläche schwimmend angeordnet sind.

Zur Herabsetzung des Fahrtwiderstandes und zur Erzielung einwandfreier Fahreigenschaften auch im Betrieb bei Verdrängerfahrt ist nach Anspruch 25 vorgesehen, daß die vordere und/oder achterliche Schürze aus ihrer Luftkissen-Wirkstellung so weit herausbewegbar, insbesondere hochfahrbar und bevorzugt nach hinten zumindest so weit hochklappbar ist, daß sie bei Verdrängerfahrt und zumindest bei ruhigem Wasser die Wasseroberfläche nicht mehr berührt.

Von besonderem Vorteil ist, wenn gemäß Anspruch 26 die vordere Schürze soweit nach oben klappbar ist, daß sie nicht mehr in den Luftraum zwischen dem Boden der Decksstruktur und der Verdrängerfahrt-Wasserlinie vorsteht.

Dies kann auf zweierlei Weise erreicht werden, sofern es sich um ein Wasserfahrzeug handelt, bei dem die vordere Schürze durch nebeneinander angeordnete, nach achtern gefaltete und vorn abgerundete elastische Taschen gebildet ist, die oben an der Decksstruktur befestigt sind und bei Luftkissenfahrt bevorzugt von der Hubluft von oben angeströmt werden.

Nach Anspruch 27 ist vorgesehen, daß im vorderen Bereich der Taschen sich im wesentlichen von oben nach unten erstreckende Schwenkarme befestigt sind, die um eine obere Querwelle nach achtern verschwenkbar sind und bei Verschwenkung die bei Verdrängerfahrt mit der Wasseroberfläche in Berührung kommenden Bereiche der elastischen Taschen von der Wasseroberfläche nach oben wegschwenken.

Eine weitere Möglichkeit gemäß Anspruch 28 besteht darin, daß beim Hochschwenken die obere Befestigung der Taschen unverändert bleibt und die Taschen elastisch verformt werden.

In jedem Fall soll vorteilhafterweise oberhalb der vorderen Schürze ein Unterbringungsraum für die hochgefahrene Schürze vorgesehen sein, wie in Anspruch 29 beschrieben ist.

Um eine einwandfreie Abdichtung bei Luftkissenbetrieb zu erzielen, soll die achterliche Schürze sich nach Anspruch 30 bis in seitliche innere Ausnehmungen der Schwimmer erstrecken.

Sofern es sich um ein Luftkissenwasserfahrzeug handelt, bei dem die achterliche Schürze aus parallel zueinander verlaufenden, im wesentlichen hintereinander angeordneten elastischen Taschen besteht, ist die Ausbildung gemäß Anspruch 31 so, daß die Taschen an eine Luftdruckquelle angeschlossen sind und wahlweise aufgeblasen oder druckentlastet sind.

Die Einziehbarkeit der Schürzen während der Verdrängerfahrt erniedrigt aber nicht nur den Fahrtwiderstand, sondern setzt auch den Verschleiß der Schürzen erheblich herab. Die erhöhten Geschwindigkeiten von 20 kn können nur durch eine völlige Eliminierung des durch die Schürzen hervorgerufenen Fahrtwiderstandes erzielt werden.

Die Klappbarkeit der achterlichen Schürze kann relativ einfach durch eine querverlaufende Kissenausbildung und eine kinderwagenverdeckartige Stabmechanik mit pneumatischer Betätigung erzielt werden.

Die Wegklappbarkeit der vorderen Schürze erfordert zweckmäßigerweise einen besonderen Unterbringungsraum für die Schürze im hochgeklappten Zustand.

Zum Wegklappen der vorderen Schürze kann aber auch der Umstand ausgenutzt werden, daß die einzelnen elastischen Taschen von Haus aus so nachgiebig sind, daß sie starken Schlägen im Seegang nachgeben können. Diese Nachgiebigkeit kann auch dazu ausgenutzt werden, durch das Angreifen von mechanischen Verstellmitteln die vordere Schürze so elastisch zu verformen, daß ohne das Vorsehen besonderer Klappmittel sämtliche Bereiche der Schürze bei Verdrängerfahrt aus der Wasseroberfläche ausgetaucht sind.

Im allgemeinen wird ein Teil des Luftstromes für die Erzeugung des Luftkissens im Bereich der Schürzen ausgestoßen, um durch den entsprechenden Druck die elastischen Schürzen zu stabilisieren.

Statt die Schürzen hochklappbar auszubilden, könnten sie auch einziehbar gestaltet werden.

Das Einziehen der elastisch angeordneten Schürzen könnte z.B. durch an ihren Enden angeordnete Leinen erzielt werden, die durch geeignete Winden eingezogen werden können, um die Schürzen hochzuschwenken oder hochzuziehen.

Bevorzugt sind nach Anspruch 32 die Schürzen in verschiedenen Zwischenstellungen zwischen der reinen Verdrängerfahrtposition und der reinen Luftkissenfahrtposition ein- und feststellbar. Auf diese Weise können auch verschiedene Fahrzustände zwischen der reinen Verdrängerfahrt und der reinen Luftkissenfahrt verwirklicht werden, wobei die verschiedenen Zwischenstellungen seegangsabhängig, tiefgangsabhängig sind oder auch davon abhängen können, wie hoch das Fahrzeug aufgrund möglicher Ortung durch den Gegner aus der Wasseroberfläche herausragen darf.

Die Erfindung wird mit besonderem Vorteil bei Katamaran-Luftkissenwasserfahrzeugen bis zu einem Gewicht von 700 bis 1000 t (z.B. Minenkampfboote) angewandt. Sie ist besonders geeignet für Schnellboote im Gewichtsbereich von 300 bis 500 t, wobei im Luftkissenbetrieb Geschwindigkeiten bis annähernd 40 kn erzielt werden können, während bei Verdrängungsfahrt noch 20 kn gefahren werden können.

Die Erfindung wird im folgenden beispielsweise anhand der Zeichnung beschrieben; in dieser zeigt

Fig. 1    eine teilweise geschnittene Seitensicht eines Katamaran-Luftkissenwasserfahrzeuges,

Fig. 2    eine teilweise geschnittene Draufsicht des Wasserfahrzeuges nach Fig. 1, wobei nur die Backbordhälfte dargestellt ist, da die Steuerbordhälfte völlig symmetrisch dazu ausgebildet ist,

Fig. 3    eine teilweise geschnittene Ansicht des Wasserfahrzeuges nach den Fig. 1 und 2 von achtern gesehen, wobei die Steuerbordhälfte den Linienriß des Vorschiffes und die Backbordhälfte den Linienriß des Achterschiffes wiedergibt,

Fig. 4    eine vergrößerte Ansicht analog Fig. 3 zur schematischen Veranschaulichung der Anordnung verschiedener Einbauaggregate,

Fig. 5    eine schematische Seitenansicht einer ersten Ausführungsform der vorderen Schürze des Luftkissenwasserfahrzeuges,

Fig. 6    eine schematische Schnittansicht nach Linie VI-VI in Fig. 5,

Fig. 7    eine schematische teilweise geschnittene Seitenansicht einer weiteren Ausführungsform der vorderen Schürze eines Katamaran-Luftkissenwasserfahrzeuges,

Fig. 8    eine schematische Seitenansicht einer hochklappbaren achterlichen Schürze für das Katamaran-Luftkissenwasserfahrzeug in Luftkissenwirkstellung und

Fig. 9    die gleiche Ansicht wie Fig. 8, wobei jedoch die achterliche Schürze im hochgeklappten Zustand wiedergegeben ist.

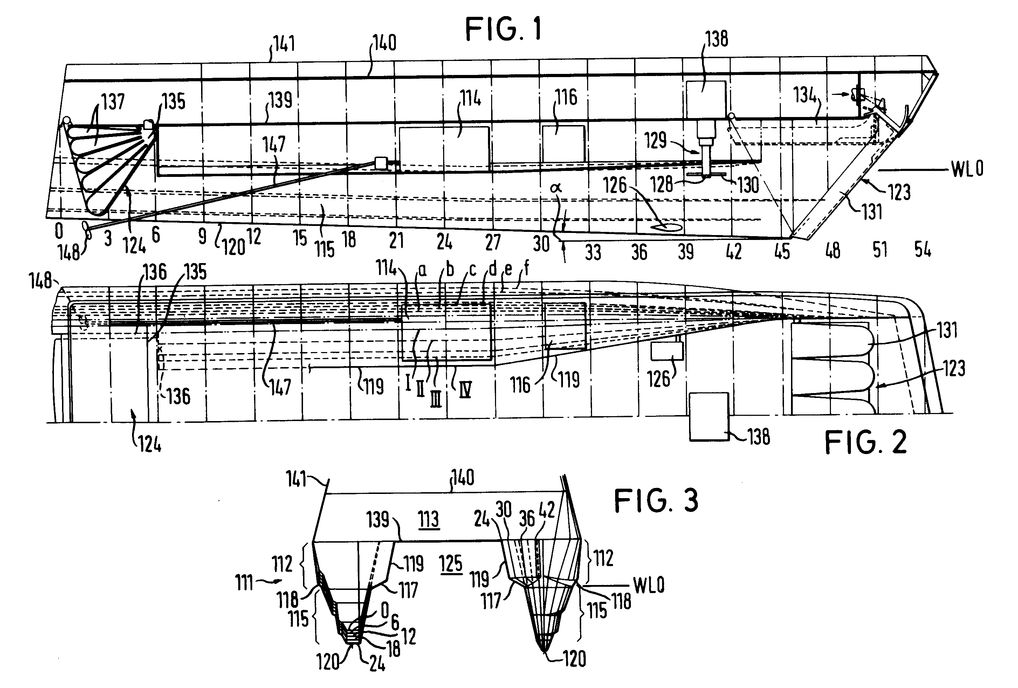

Nach den Fig. 1 bis 3 weisen die beiden Schwimmer 111 eines erfindungsgemäßen Katamaran-Luftkissenfahrzeuges im Achterschiff Spanten 0, 3, 6, 9, 12, 15, 18, 21, 24, 27 und im Vorschiff Spanten 30, 33, 36, 39, 42, 45, 48, 51, 54 auf.

Auf der Außenseite der Schwimmer 111 sind Stringerlinien a, b, c, d, e, f, auf der Innenseite Stringerlinien I, II, III und IV vorgesehen.

Die Kiellinie ist mit 120 bezeichnet.

Nach den Fig. 1 bis 4 erstreckt sich zwischen den oberen Enden der Schwimmer 111 eine Decksstruktur 113, die z.B. einen Rumpfboden 139 und ein im Abstand darüber angeordnetes Hauptdeck 140 umfassen kann. Das Hauptdeck 140 ist beispielsweise von einem Schanzkleid 141 umgeben.

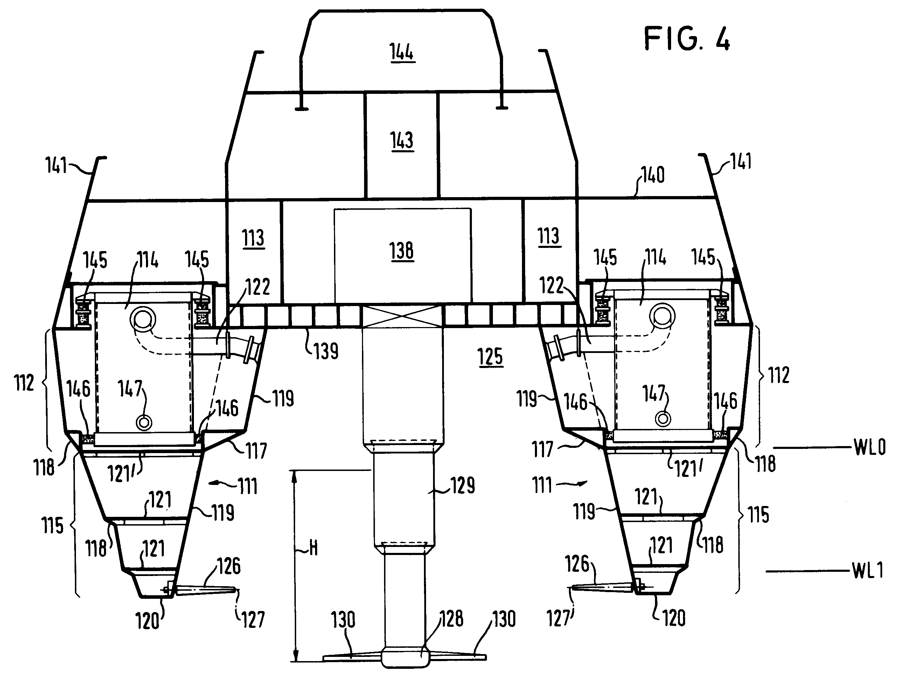

Nach Fig. 4 können über dem Hauptdeck 140 noch weitere Aufbauten 143 und 144 vorgesehen sein.

Die beiden Schwimmer 111 weisen nach den Fig. 1 bis 4 in einen unterhalb der Verdrängerfahrt-Wasserlinie WLO liegenden unteren Verdrängungs-Schwimmerbereich 115 und einen oberhalb der Verdrängerfahrt-Wasserlinie WLO befindlichen oberen Schwimmerbereich als Aufnahmeaufsatz 112 auf.

Der genaue Linienriß der Schwimmer 111 und somit des Aufnahmeaufsatzes 112 für Maschinen und des Verdrängungs-Schwimmerbereichs 115 ergibt sich aus den Fig. 1 bis 3. Danach erweitern sich die Schwimmer 111 im unteren Verdrängungs-Schwimmerbereich 115 unter einem relativ spitzen Winkel nach oben, wobei auf der Außenseite kleine Stufen 118 vorgesehen sind, die Stabilisierungszwecken und der Widerstandsherabsetzung dienen.

Innen befindet sich dagegen zwischen dem Verdrängungs-Schwimmerbereich 115, der eine zur Senkrechten nur leicht geneigte Innenwand 119 (Fig. 4) aufweist, und dem Aufnahmeaufsatz 112 ein eine deutliche Stufe definierender, stufenartiger Übergangsbereich 117, d.h., daß der eine Erweiterung darstellende Aufnahmeaufsatz 112 als oberer Schwimmerbereich nach innen gegenüber dem unteren Verdrängungs-Schwimmerbereich 115 stufenartig stark verbreitert ist. Da nach den Fig. 3 und 4 aufgrund der schrägen Form der Außenwände der Aufnahmeaufsatz 112 auch auf der Außenseite weiter nach außen ausfällt als der Verdrängungs-Schwimmerbereich 115, wird insgesamt in der oberen Hälfte der Schwimmer 111 ein Aufnahmeraum mit einer deutlich größeren Breite zur Unterbringung der Hauptantriebsaggregate 114 geschaffen, welche nach Fig. 4 als Container ausgebildet und über Dämpfungs-Tragelemente 145 mit ihren Oberseiten an die Struktur der Schwimmer 111 bzw. die Decksstruktur 113 angehängt sind.

Im unteren Bereich sind die Hauptantriebsaggregate 114 lediglich mittels Schockdämpfern 146 in seitlicher und in Längsrichtung (nicht dargestellt) an dem durch ein Deck 121' gebildeten Zwischenboden der Schwimmer 111 abgestützt.

Nach Fig. 1 sind die Hauptantriebsaggregate 114 bei der halben Schifflänge innerhalb der oberen Bereiche der Schwimmer 111 innerhalb der Aufnahmeaufsätze 112 untergebracht. In den Fig. 1 und 4 nur schematisch dargestellte Antriebswellen 147 wirken auf die am Ende der Schwimmer 111 angeordneten, Schubmittel darstellenden Antriebspropeller 148.

Vor den Hauptantriebsaggregaten 114 sind innerhalb des Aufnahmeaufsatzes 112 der Schwimmer 111 Ventilatorantriebsaggregate 116 untergebracht, welche von außen Luft ansaugen, die dann durch nicht dargestellte Austrittsöffnungen in den Luftraum 125 (Fig. 3, 4) ausgestoßen wird, welcher seitlich von den Schwimmern 111 und vorn und hinten durch elastische Schürzen 123, 124 eingegrenzt ist (Fig. 1).

Wichtig ist, daß die Innenwände 119 der Schwimmer 111 gemäß Fig. 2 zumindest vom Bereich der Schiffsmitte ab nach achtern im wesentlichen parallel zueinander verlaufen. Im Bereich des Vorschiffes laufen die Innenwände 119 von außen konisch nach innen leicht aufeinander zu.

Die Kiellinie 120 schließt nach Fig. 1 mit der Horizontalen einen kleinen Winkel $\alpha$ von etwa 2° ein.

Nach Fig. 4 ist der untere Verdrängungs-Schwimmerbereich 115 der Schwimmer 111 durch zwei Decks 121 in zwei dicht gegeneinander abgedichtete Auftriebskammern unterteilt. Oben sind die Verdrängungs-Schwimmerbereiche 115 durch ein Deck 121' dicht abgeschlossen. Erst darüber beginnt der Aufnahmeaufsatz 112.

Die Unterteilung der Schwimmer durch die Decks 121, 121' gewährleistet, daß beim Undichtwerden einer der Auftriebskammern die übrigen Auftriebskammern noch zumindest soviel Auftrieb erzeugen können, daß das Wasserfahrzeug insgesamt schwimmfähig bleibt.

Nach Fig. 4 sind die Auspuffleitungen 122 der Hauptantriebsaggregate 114, welche Dieselmotoren enthalten, zu den Innenwänden 119 der Schwimmer 111 geführt, wo sie in den Luftraum 125 deutlich oberhalb der Verdrängerfahrt-Wasserlinie WLO austreten.

Das Katamaran-Luftkissenfahrzeug nach den Fig. 1 bis 4 schwimmt in Verdrängerfahrt auf der Wasserlinie WLO (Fig. 4), d.h., daß bei Verdrängerfahrt und ruhigem Wasser die Aufnahmeaufsätze 112 als obere Bereiche der Schwimmer 111 oberhalb der Wasseroberfläche WLO liegen. Zwischen der Verdrängerfahrt-Wasserlinie WLO und der Decksstruktur 113 bzw. deren Rumpfboden 139 verbleibt somit ein Abstand von 1 bis 3 und insbesondere etwa 2 m. Das Wasserfahrzeug kann jetzt als normales Katamaranfahrzeug in Verdrängerfahrt laufen, wobei durch den hohen Freiraum zwischen der Verdrängerfahrt-Wasserlinie WLO und dem Rumpfboden 139 die Decksstruktur 113 sowie die Aufbauten 143, 144 weitgehend vor Überflutung durch Wellen geschützt werden.

Bei Luftkissenfahrt befindet sich das Wasserfahrzeug auf der Luftkissenfahrt-Wasserlinie WL1 (Fig. 4).

Durch die niedrige Anordnung der Hauptantriebsaggregate 114 kann die Neigung der Antriebswellen 147 (Fig. 1) relativ gering gehalten werden, wozu auch die Anordnung der Antriebsaggregate 114, 116 etwa in der Schiffsmitte beiträgt.

Durch die Versenkung der Antriebsaggregate 114, 116 in den Schwimmern wird eine weitgehend freie Decksfläche erzielt, in der dann andere geeignete Aufbauten 143, 144 untergebracht werden können.

Da auch bei Verdrängerfahrt die Abgase durch die Auspuffleitungen 122 zwischen den Katamaran-Schwimmern 111 münden, werden die Abgase vor dem Austreten am Heck des Fahrzeuges stark mit Luft und gegebenenfalls Wassergischt vermischt, so daß sie stark gekühlt aus dem Schiffskörper austreten und somit die Infrarotortung wesentlich erschwert wird.

Nach Fig. 1, 2 und 4 sind ganz unten an den Innenseiten 119 der Schwimmer 111 um Querachsen 127 schwenkbare Stabilisatorflossen 126 vorgesehen worden, die sowohl im Sinne einer Antiroll- als auch einer Antistampfwirkung von einem zentralen Steueraggregat aus betätigt werden können. Außerdem können die Stabilisatorflossen 126 zwecks einfachen Übergangs des Wasserfahrzeugs vom Verdrängerbetrieb zum Luftkissenbetrieb leicht angestellt werden. Nach Fig. 1 sind die Stabilisatorflossen 126 im vorderen Bereich der Schwimmer 111 vorgesehen.

Wenn das Wasserfahrzeug in Luftkissenbetrieb fahren soll, werden die Ventilatorantriebsaggregate 116 (Fig. 1] eingeschaltet, worauf dann von außen angesaugte Luft in nicht dargestellter Weise in den Luftraum 125 gedrückt wird. Der Luftdruck und die Luftmenge sind so berechnet, daß nunmehr das Fahrzeug bis zur Luftkissenfahrt-Wasserlinie WL1 (Fig. 4) angehoben wird, wobei die unteren Verdrängungs-Schwimmerbereiche 115 der Schwimmer 111 nur noch ganz geringfügig in die Wasseroberfläche eintauchen, damit einerseits noch eine fahrtstabilisierende Wirkung erzielt wird und die Antriebspropeller 148 als Schubmittel noch ausreichend tief in die Wasserfläche eintauchen und so den erforderlichen Vortrieb erzeugen können.

Beim Anheben des Wasserfahrzeuges wirken auch die aus den Auspuffleitungen 122 in den Luftraum 125 eintretenden Abgase der Hauptantriebsaggregate 114 und gegebenenfalls auch der Ventilatorantriebsaggregate 116 und etwaiger Dieselgeneratoren mit. Die Stabilisatorflossen 126 können so angestellt werden, daß sie ebenfalls zum Auftrieb beitragen, was insbesondere zum leichteren Übergang von Verdrängerfahrt in Luftkissenfahrt wichtig ist, da dann die für die Erzeugung des Luftkissens vorgesehenen Aggregate etwas leistungsschwächer ausgebildet werden können.

Nach den Fig. 1, 2 und 4 ist im vorderen Bereich des Wasserfahrzeugs ein Sonargerät 138 in der Mitte zwischen den Schwimmern 111 auf der Decksstruktur 113 angeordnet. Das Sonargerät 138 weist eine nach unten vom Rumpfboden 139 vorstehende zentrale, teleskopartig ausgebildete Säule 129 auf, an deren unterem Ende sich eine Sonarvorrichtung 128 befindet, die aktiv und/oder passiv arbeiten kann. Neben der Sonarvorrichtung 128 besitzt die Säule 129 an ihrem unteren Ende Stabilisierungsflossen 130, die ein Tragflügelprofil haben und auch kreisrund mit der Sonarvorrichtung 128 im Zentrum ausgebildet sein können.

Bei Verdrängerfahrt ist die Säule 129 gemäß Fig. 1 voll eingezogen, wobei die Sonarvorrichtung 128 und die Stabilisierungsflossen 130 geringfügig unter die Verdrängerfahrt-Wasserlinie WLO eintauchen und wirksam sind.

Im ausgefahrenen Zustand nimmt die Säule 129 die aus Fig. 4 ersichtliche Position ein, in der auch bei Luftkissenfahrt die Sonarvorrichtung 128 und die Stabilisierungsflossen 130 unter die Luftkissenfahrt-Wasserlinie WL1 eingetaucht sind.

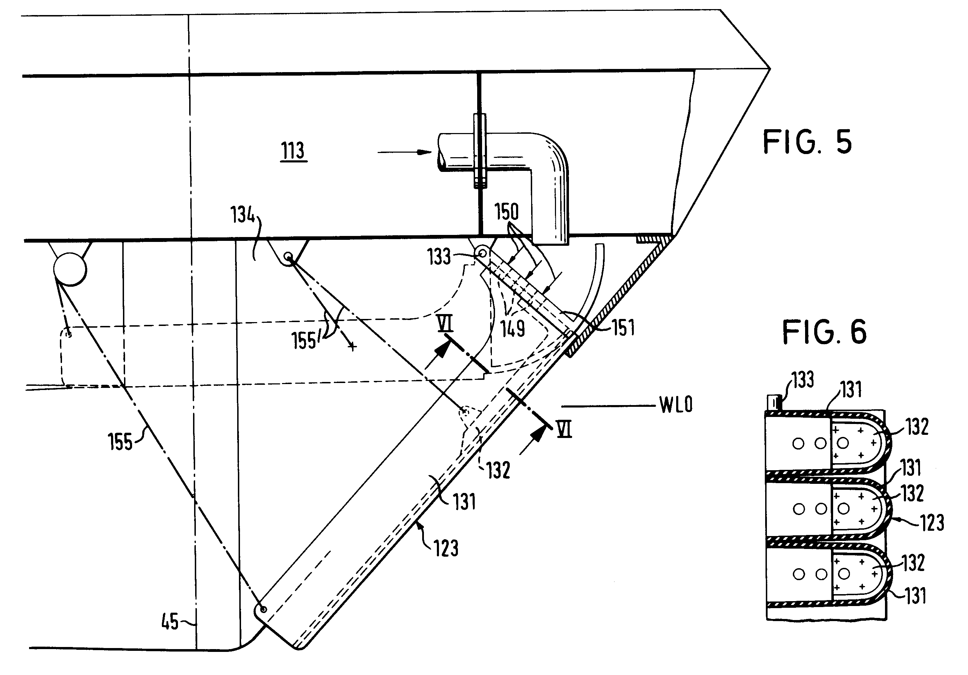

Gemäß Fig. 5 besteht die vordere Schürze 123 des Katamaran-Luftkissenwasserfahrzeugs aus einzelnen elastischen Taschen 131, die aus einem elastischen Material, z.B. verstärktem Gummi, hergestellt sind, am Oberrand Verstärkungen und in der Mitte eine Anschlußlasche tragen.

Zahlreiche derartige elastische Taschen 131 sind zur Bildung der vorderen Schürze 123 nebeneinander angeordnet (Fig. 6).

Nach Fig. 5 münden die elastischen Taschen 131 oben an einem mit Löchern 149 versehenen Zwischenboden 151, durch den in Richtung der Pfeile 150 von den nicht dargestellten Ventilatoren im Luftkissenbetrieb Luft eingeblasen wird, welche nicht nur das Luftkissen erzeugt, sondern auch die elastischen Taschen 131 so versteift, daß sie die aus Fig. 5 ersichtliche Position beibehalten.

Erfindungsgemäß sind nach den Fig. 5 und 6 Schwenkarme 132 in den vorderen gerundeten Bereichen der Taschen 131 angeordnet und mit dem Taschenmaterial fest verbunden. Oben sitzen die Schwenkarme 132 auf einer durchgehenden Querwelle 133, um die die vordere Schürze 123 insgesamt so nach hinten geschwenkt werden kann, daß die Taschen 131 die in Fig. 5 gestrichelt dargestellte, nach achtern geschwenkte Position einnehmen. Hierbei werden die vorderen Bereiche der elastischen Taschen 131 mit nach hinten genommen und die Taschen insgesamt in der aus Fig. 5 ersichtlichen Position elastisch verformt. Entscheidend ist, daß hierbei die elastischen Taschen 131 bei Verdrängerfahrt über die Verdrängerfahrt-Wasserlinie WLO angehoben werden, so daß in diesem Fall zumindest bei ruhigem Wasser die vordere Schürze 123 nicht mehr in Berührung mit der Wasseroberfläche ist, was eine wesentliche Herabsetzung des Fahrtwiderstandes bedeutet. Die Schwenkbewegung kann mittels an der Unterseite der vorderen Schürze 123 angreifender Seile 155 oder auch durch eine hydraulische Zugvorrichtung 155' herbeigeführt werden, die an den Schwenkarmen 132 angreift.

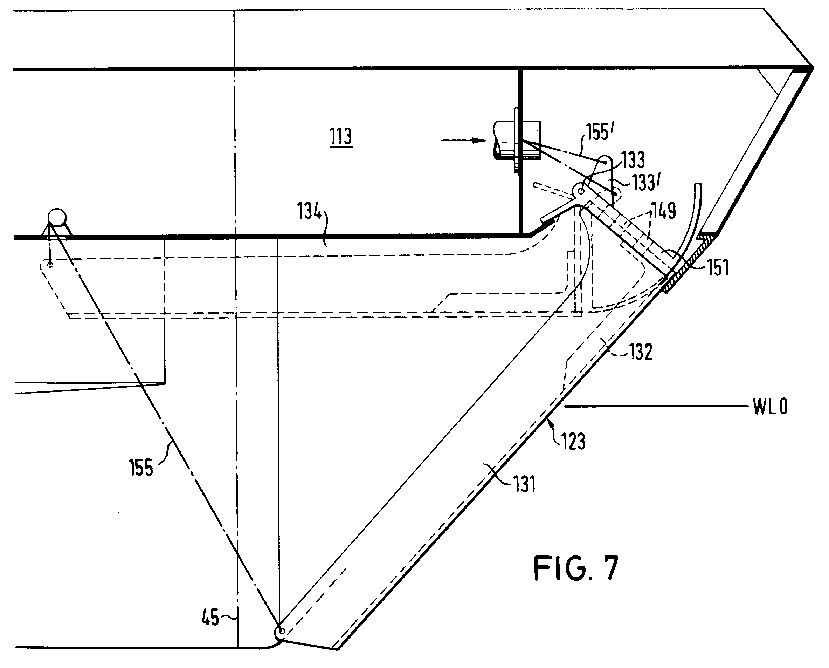

Weiter hochgeschwenkt werden können die elastischen Taschen 131 der vorderen Schürze 123, wenn auch der mit Löchern 149 versehene Zwischenboden 151 mit nach oben geschwenkt wird. In jedem Fall ist oberhalb der vorderen Schürze 123 ein Unterbringungsraum 134 für dieselbe vorgesehen. Am günstigsten ist es, wenn die vordere Schürze 123 so weit nach oben geklappt wird, daß sie überhaupt nicht mehr den Luftraum 125 zwischen dem Rumpfboden 139 und der Verdrängerfahrt-Wasserlinie WLO vorsteht, was auch bei starkem Seegang eine optimale Widerstandsherabsetzung ergibt. Weiter ist bei dem Ausführungsbeispiel nach Fig. 7 vorgesehen, daß zur Verschwenkung der vorderen Schürze 123 eine hydraulische Vorrichtung 155' an einem Schwenkarm 133' angreift.

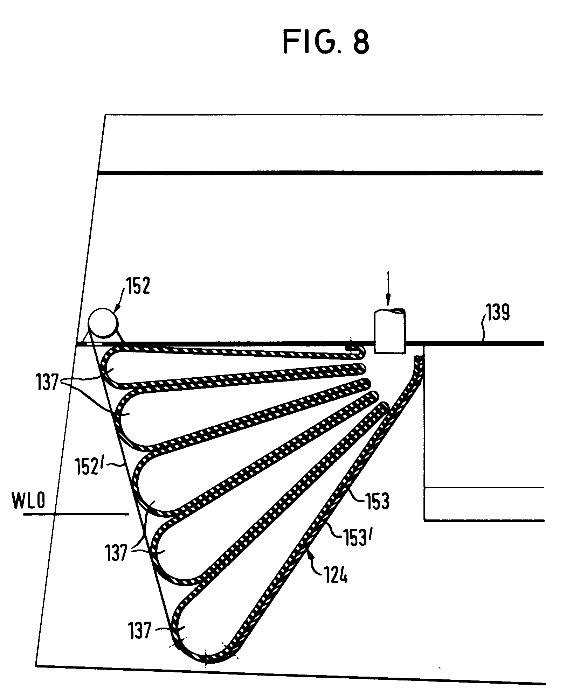

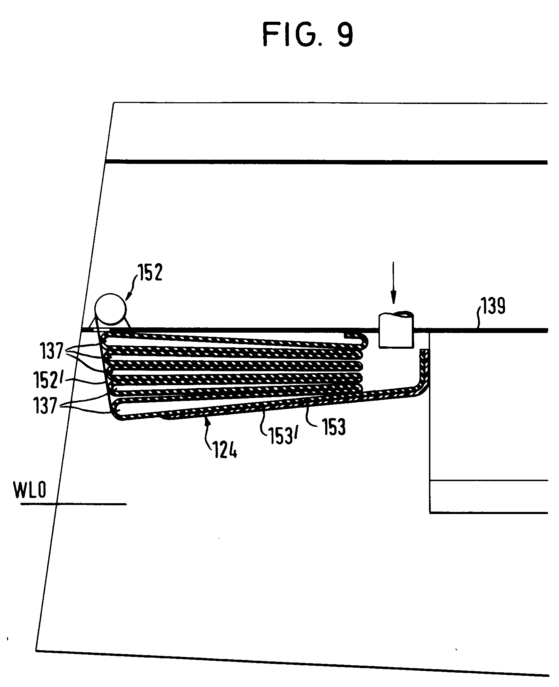

Im Heckbereich des Katamaran-Luftkissenfahrzeuges ist nach den Fig. 1, 2 und 8 ebenfalls eine querverlaufende elastische achterliche Schürze 124 vorgesehen, welche aus hintereinander angeordneten elastischen Taschen 137 besteht, die im wesentlichen um eine Querwelle 135 z.B. mittels eines pneumatischen oder hydraulischen Einzugs-Seilantriebs 152 (Fig. 8) in die eingezogene Position nach Fig. 9 verstellt werden kann. Die Seile 152' greifen am unteren Ende der achterlichen Schürze 124 an.

Um den gemäß Fig. 8 hintereinander angeordneten Taschen 137 eine ausreichende Stabilität verbunden mit guter Elastizität zu geben, ist die vorderste Wand 153 der vordersten Tasche 137 mit einem Kunststoffträger 153' versehen, so daß sie etwas steifer ausgebildet ist.

Die elastischen Taschen 137 sind durch Anschluß an eine Luftdruckqelle (Pfeil in Fig. 8, 9) in die aus Fig. 1 und 8 dargestellte Position aufgeblasen, was ihnen auch die erforderliche Steifigkeit verleiht. Durch Ablassen der Luft, d.h. durch Druckentlastung und durch Einziehen des Seiles 152' mittels des Einzugs-Seilantriebes 152 in die in Fig. 9 dargestellte Position können die Taschen 137 völlig aus dem Bereich des Luftraums 125 nach oben verschwenkt werden, so daß sie bei Verdrängerfahrt deutlich oberhalb der Verdrängerfahrt-Wasserlinie WLO zu liegen kommen und somit ebenfalls zum Fahrtwiderstand bei reiner Verdrängerfahrt nichts beitragen und nicht beschädigt werden können.

Nach Fig. 2 erstreckt sich die achterliche Schürze 124 seitlich in Ausnehmungen 136 der Schwimmer 111, wodurch in diesem Bereich eine gute Abdichtung gegen unerwünschtes Austreten von Luft beim Luftkissenbetrieb erzielt wird.

Es ist noch darauf hinzuweisen, daß die Schürzen 123, 124 bei Luftkissenfahrt etwas oberhalb der Wasseroberfläche enden, also ein kleiner Spalt zwischen den unteren Berandungen der Schürzen 123, 124 und der Wasseroberfläche verbleibt, wodurch ein besonders geringer Fahrtwiderstand in Luftkissenfahrt erzielt wird und auch bei Luftkissenfahrt der Verschleiß der Schürzen 123, 124 sehr gering gehalten werden kann.

Die Länge des in den Fig.1 bis 3 dargestellten Schiffes beträgt ca. 55 m, die Breite ca. 16 m und der Tiefgang ca. 4 m.

## Patentansprüche

1. Katamaran-Luftkissenwasserfahrzeug mit zwei sich in Fahrtrichtung erstreckenden, parallel zueinander mit Abstand angeordneten Schwimmern (111), welche jeweils einen Verdrängungs-Schwimmerbereich (115) umfassen, der bei Verdrängerfahrt eingetaucht ist und eine Verdrängerfahrt-Wasserlinie definiert (WLO), wobei sich der Querschnitt der Schwimmer von unten nach oben erweitert und die Schwimmer oben durch eine Decksstruktur (113) miteinander starr verbunden sind, mit vorn und achtern zwischen den Schwimmern angeordneten elastischen Schürzen (123, 124), die sich bis mindestens annähernd zur Wasseroberfläche erstrecken und mit den Schwimmern einen Luftraum (125) zwischen dem Boden der Decksstruktur und der Wasseroberfläche eingrenzen, mit Hauptantriebsaggregaten (114), welche im achterlichen Bereich der Schwimmer angeordnete Schubmittel (148) antreiben und mit Ventilatoren (116), die zum Anheben des Fahrzeuges aus der Verdrängerfahrt in die Luftkissenfahrt und damit auf die Luftkissenfahrt-Wasserlinie von außen angesaugte Luft in den eingegrenzten Luftraum unterhalb des Bodens der Decksstruktur blasen, wobei die Schwimmer zumindest entlang eines wesentlichen Bruchteils ihrer Gesamtlänge eine deutlich nach innen vorspringende Erweiterung aufweisen, die aus einem Aufnahmeaufsatz (112) mit einem Übergangsbereiche (117) gebildet ist und zur Aufnahme der Hauptantriebsaggregate dient, wobei im oberen Endbereich des Aufnahmeaufsatzes die Decksstruktur angesetzt ist, dadurch **gekennzeichnet,** daß der Übergangsbereich (117) zum Aufnahmeaufsatz (112) stufenartig oberhalb der Verdrängerfahrt-Wasserlinie (WLO) beginnt und eine deutliche Stufe definiert.

2. Katamaran-Luftkissenwasserfahrzeug nach Anspruch 1, dadurch **gekennzeichnet,** daß der den stufenartigen Übergangsbereich (117) aufweisende Aufnahmeaufsatz (112) oberhalb der Verdrängerfahrt-Wasserlinie (WLO) sich fast über die gesamte Schiffslänge erstreckt und außer den Hauptantriebsaggregaten (114) auch noch weitere Aggregate, wie Ventilatorantriebsaggregate (116), Elektrogeneratoren, Klimaanlagen, Wasseraufbereitungsanlagen, aufnimmt.

3. Katamaran-Luftkissenwasserfahrzeug nach Anspruch 1 oder 2, dadurch **gekennzeichnet,** daß der den stufenartigen Übergangsbereich (117) aufweisende Aufnahmeaufsatz (112) seine größte Breite bei der halben Schiffslänge besitzt, und daß dort die Hauptantriebsaggregate (114) angeordnet sind.

4. Katamaran-Luftkissenwasserfahrzeug nach Anspruch 3,

dadurch **gekennzeichnet,**
daß der Übergangsbereich (117) erst in einem bestimmten Abstand vom Bug beginnt und seine Breite dann bis zum Erreichen der größten Breite nach hinten stetig zunimmt.

5. Katamaran-Luftkissenwasserfahrzeug nach Anspruch 3 oder 4,
dadurch **gekennzeichnet,**
daß der Übergangsbereich (117) und somit der Aufnahmeaufsatz (112) die größte Breite nach hinten im wesentlichen beibehält.

6. Katamaran-Luftkissenwasserfahrzeug nach einem der vorhergehenden Ansprüche,
dadurch **gekennzeichnet,**
daß bei der halben Schiffslänge die Höhe des den Übergangsbereich (117) aufweisenden Aufnahmeaufsatzes (112) das 0,8 bis 1,2-fache der Höhe des unterhalb der Verdrängerfahrt-Wasserlinie (WLO) liegenden unteren Verdrängungs-Schwimmerbereiches (115) beträgt.

7. Katamaran-Luftkissenwasserfahrzeug nach einem der vorhergehenden Ansprüche,
dadurch **gekennzeichnet,**
daß bei der halben Schiffslänge der Übergangsbereich (117) ein solches Ausmaß hat, daß die Breite jedes Schimmers (111) am Übergang vom unteren Verdrängungs-Schwimmbereich (115) zum Aufnahmeaufsatz (112) um 30 bis 70 % zunimmt.

8. Katamaran-Luftkissenwasserfahrzeug nach einem der vorhergehenden Ansprüche,
dadurch **gekennzeichnet,**
daß der Boden des Übergangsbereiches (117) leicht gerundet oder schräg verläuft.

9. Katamaran-Luftkissenwasserfahrzeug nach einem der vorhergehenden Ansprüche,
dadurch **gekennzeichnet,**
daß die Schwimmer (111) sich außen im wesentlichen stetig oder in kleinen Stufen (118) verbreitern.

10. Katamaran-Luftkissenwasserfahrzeug nach einem der vorhergehenden Ansprüche,
dadurch **gekennzeichnet,**
daß der Boden des Übergangsbereiches (117) unter einem Winkel von 20° bis 40° zur Horizontalen von außen nach innen ansteigend verläuft.

11. Katamaran-Luftkissenwasserfahrzeug nach einem der vorhergehenden Ansprüche,
dadurch **gekennzeichnet,**

daß die Innenwände (119) des unterhalb der Verdrängerfahrt-Wasserlinie (WLO) liegenden unteren Verdrängungs-Schwimmerbereiches (115) von vorn bis achtern im wesentlichen parallel zueinander verlaufen.

12. Katamaran-Luftkissenwasserfahrzeug nach einem der Ansprüche 1 bis 10,
dadurch **gekennzeichnet,**
daß die Innenwände (119) des unteren Verdrängungs-Schwimmerbereiches (115) im Bereich des Vorschiffes von außen konisch leicht nach innen aufeinander zu laufen und im Anschluß daran bis nach achtern im wesentlichen parallel zueinander verlaufen.

13. Katamaran-Luftkissenwasserfahrzeug nach einem der vorhergehenden Ansprüche,
dadurch **gekennzeichnet,**
daß die Kiellinie der Schwimmer (111) von vorn nach achtern leicht ansteigt.

14. Katamaran-Luftkissenwasserfahrzeug nach einem der vorhergehenden Ansprüche,
dadurch **gekennzeichnet,**
daß die Schwimmer (111) durch mindestens ein Deck (121, 121') in gegeneinander abgedichtete Auftriebskammern unterteilt sind.

15. Katamaran-Luftkissenwasserfahrzeug nach Anspruch 14,
dadurch **gekennzeichnet,**
daß ein Deck (121') zur Abteilung von zwei übereinander liegenden abgedichteten Auftriebskammern im Übergangsbereich (117) vom unteren Verdrängungs-Schwimmerbereich (115) zum oberen Aufnahmeaufsatz (112) vorgesehen ist.

16. Katamaran-Luftkissenwasserfahrzeug nach einem der vorhergehenden Ansprüche,
dadurch **gekennzeichnet,**
daß die Hauptantriebsaggregate (114) und ggf. auch die Ventilatorantriebsaggregate (116) als Container ausgebildet sind, die mit ihrer Oberseite an die Decksstruktur (113) und/oder Schwimmerstruktur angehängt und mit ihrer Unterseite lediglich seitlich und in Längsrichtung an der Schwimmerstruktur abgestützt sind.

17. Katamaran-Luftkissenwasserfahrzeug nach einem der vorhergehenden Ansprüche,
dadurch **gekennzeichnet,**
daß Auspuffleitungen (122) der Hauptantriebsaggregate (114) und/oder Ventilatorantriebsaggregate (116- sowie etwaiger Generatoren in dem von den Schwimmern (111) und den Schürzen (123, 124) eingegrenzten, oberhalb der Wasseroberfläche befindlichen Luftraum (125) münden, wobei der Luftkissendruck kleiner oder gleich dem Abgasdruck aus den Auspuffleitungen (122) ist.

18. Katamaran-Luftkissenwasserfahrzeug nach einem der vorhergehenden Ansprüche, dadurch **gekennzeichnet,** daß im unteren Endbereich der Schwimmer (111) innen um Querachsen (127) verschwenkbare Stabilisatorflossen (126) angeordnet sind, welche so steuerbar sind, daß sie den Übergang von der Verdrängerfahrt in die Luftkissenfahrt und/oder die Überschreitung eines kritischen Geschwindigkeitsbereiches bei Luftkissenfahrt mit höherer Geschwindigkeiten unterstüzen.

19. Katamaran-Luftkissenwasserfahrzeug nach Anspruch 18, dadurch **gekennzeichnet,** daß vorne ein Paar von Stabilisatorflossen (126) vorgesehen ist.

20. Katamaran-Luftkissenwasserfahrzeug nach Anspruch 19, dadurch **gekennzeichnet,** daß im achterlichen Bereich der Schwimmer (111) ein weiteres Paar von Stabilisatorflossen vorgesehen ist.

21. Katamaran-Luftkissenwasserfahrzeug nach einem der vorhergehenden Ansprüche, dadurch **gekennzeichnet,** daß an der Decksstruktur (113) zwischen den Schwimmern (111) eine am unteren Ende eine Sonarvorrichtung (128) tragende teleskopisch ein- und ausfahrbare Säule (129) angeordnet ist, deren unteres Ende sich im eingefahrenen Zustand bis etwa unter die Verdrängerfahrt-Wasserlinie (WLO) erstreckt.

22. Katamaran-Luftkissenwasserfahrzeug nach Anspruch 21, dadurch **gekennzeichnet,** daß im unterhalb der Verdrängerfahrt-Wasserlinie (WLO) liegenden Bereich der eingefahrenen Säule (129) Stabilisierungsflossen (130) vorgesehen sind.

23. Katamaran-Luftkissenasserfahrzeug nach Anspruch 21 oder 22, dadurch **gekennzeichnet,** daß der Hub (H) der teleskopisch ein- und ausfahrbaren Säule (129) größer als die Höhendifferenz zwischen Verdränger- und Luftkissenfahrt ist.

24. Katamaran-Luftkissenwasserfahrzeug nach einem der Ansprüche 21, 22 oder 23, dadurch **gekennzeichnet,** daß die Sonarvorrichtung (128) winkelverstellbar am unteren Ende der Säule (129) angebracht ist.

25. Katamaran-Luftkissenwasserfahrzeug nach einem der vorhergehenden Ansprüche, dadurch **gekennzeichnet,** daß die vordere und/oder achterliche Schürze (123; 124) aus ihrer Luftkissen-Wirkstellung so weit herausbewegbar ist, daß sie bei Verdrängerfahrt und zumindest bei ruhigem Wasser die Wasseroberfläche nicht mehr oder nur unwesentlich berührt bzw. berühren.

26. Katamaran-Luftkissenwasserfahrzeug nach einem der vorhergehenden Ansprüche, dadurch **gekennzeichnet,** daß die vordere Schürze (123) so weit nach oben klappbar ist, daß sie nicht mehr in den Luftraum (125) zwischen dem Boden (139) der Decksstruktur (113) und der Verdrängerfahrt-Wasserlinie (WLO) vorsteht.

27. Katamaran-Luftkissenwasserfahrzeug nach Anspruch 25 oder 26, dadurch **gekennzeichnet,** daß die vordere Schürze (123) durch nebeneinander angeordnete, nach achtern gefaltete und vorn abgerundete elastische Taschen (131) gebildet ist, die oben an der Decksstruktur (113) befestigt sind und bei Luftkissenfahrt ggf. von der Hubluft von oben angeströmt werden, und daß im vorderen Bereich der Taschen (131) sich im wesentlichen von oben nach unten erstreckende Schwenkarme (132) befestigt sind, die um eine obere Querwelle (133) nach achtern verschwenkbar sind und bei Verschwenkung die bei Verdrängerfahrt mit der Wasseroberfläche in Berührung kommenden Bereiche der elastischen Taschen (131) von der Wasseroberfläche nach oben wegschwenken.

28. Katamaran-Luftkissenwasserfahrzeug nach Anspruch 25 oder 26, dadurch **gekennzeichnet,** daß die vordere Schürze (123) durch nebeneinander angeordnete, nach achtern gefaltete und vorn abgetrundete elastische Taschen (131) gebildet ist, die oben an der Decksstruktur (113) befestigt sind und bei Luftkissenfahrt ggf. von der Hubluft von oben angeströmt werden, und daß beim Hochschwenken die obere Befestigung der Taschen (131) unverändert bleibt und die Taschen (131) elastisch verformt werden.

29. Katamaran-Luftkissenwasserfahrzeug nach einem der Ansprüche 25 bis 28,
dadurch **gekennzeichnet,**
daß oberhalb der vorderen Schürze (123) ein Unterbringungsraum (134) für die hochgefahrene vordere Schürze (123) vorgesehen ist.

30. Katamaran-Luftkissenwasserfahrzeug nach einem der Ansprüche 25 bis 29,
dadurch **gekennzeichnet,**
daß die achterliche Schürze (124) sich bis in seitliche innere Ausnehmungen (136) der Schwimmer (111) erstreckt und ggf. die seitlichen Stirnseiten der achterlichen Schürze (124) gegen die Seitenwände der Ausnehmungen (136) abgedichtet sind.

31. Katamaran-Luftkissenwasserfahrzeug nach einem der Ansprüche 25 bis 30,
dadurch **gekennzeichnet,**
daß die achterliche Schürze (124) aus parallel zueinander verlaufenden, im wesentlichen hintereinander angeordneten elastischen Taschen (137) besteht, die an eine Luftdruckquelle angeschlossen und wahlweise aufgeblasen oder druckentlastet sind.

32. Katamaran-Luftkissenwasserfahrzeug der Ansprüche 25 bis 31,
dadurch **gekennzeichnet,**
daß die Schürzen (123, 124) in Zwischenstellungen zwischen ihrer Luftkissen-Wirkstellung und einer Stellung bei reiner Verdrängerfahrt ein- und feststellbar sind.

## Claims

1. Catamaran air cushion water vehicle comprising: two spaced apart floats (111) which extend parallel to one another in the direction of travel, and include each a displacement mode float region (115), which extends into the water during travel in the displacement mode and defines a water line (WLO) for travel in the displacement mode,
wherein the cross-sections of the floats become broader from the bottom to the top and wherein the floats are rigidly connected together at the top by a deck structure;
resilient skirts (123, 124) which are arranged at the stem and at the stern between the floats, which extend at least approximately to the water surface and, together with the floats, bound an air space (125) between the bottom of the deck structure and the water surface;
main propulsion units (114) which drive propulsion means (148) arranged in the stern region of the floats; and fans (116) which blow air sucked in from the outside into the bounded air space beneath the bottom of the deck structure in order to lift the water vehicle from travel in the displacement mode and therefore up to the water line of travel in the air cushion (hovercraft) mode; wherein the floats each have a bulge projecting substantially inwardly formed by a hull section (112) having a transition region (117) at least along a substantial portion of their total length, with the bulges serving to accomodate the main propulsion units and with the deck structure being attached to the upper end regions of the hull sections, characterized in that the transition region (117) to the hull section (112) starts in a step-like manner above the water line (WLO) during travel in the displacement mode and defines a substantial step.

2. A water vehicle in accordance with claim 1, characterized in that the hull-section (112) having the step-like transition region (117) above the water line (WLO) during travel in the displacement mode extends over almost the full length of the ship and accomodates, in addition to the main propulsion units (114), also further units, such as fan drive units (116), electrogenerators, air-conditioning systems, and water preparation systems.

3. A water vehicle in accordance with claim 1 or claim 2, characterized in that the hull sections (112) having the step-like transition region (117) have their largest widths half-way along the ship; and in that the main propulsion units (114) are arranted at this place.

4. A water vehicle in accordance with claim 3, characterized in that the transition region (117) starts only at a given distance from the stem and its width constantly increases rearwardly up to the reaching of the greatest width.

5. A water vehicle in accordance with claim 3 or claim 4, characterized in that the transition region (117) and therefore the hull sections (112) substantially retain the largest width in the stern direction (rearward direction).

6. A water vehicle in accordance with one of the preceding claims, characterized in that the height of each hull sections (112) having the transistion region (117) half-way along the ship amounts to 0.8 to 1.2 times the height of the lower displacement mode float region (115) which extends below the water line (WLO) during travel in the displacement mode.

**7.** A water vehicle in accordance with one of the preceding claims, characterized in that halfway along the ship, the transition region (117) has such a size that the width of each float (111) increases by 30 to 70 % at the transition from the lower displacement mode float region (115) to the hull section (112).

**8.** A water vehicle in accordance with one of the preceding claims, characterized in that the bottom of the transition region (117) extends in a gently rounded or inclined manner.

**9.** A water vehicle in accordance with one of the preceding claims, characterized in that the floats (111) increase in width outwardly substantially continuously or in small steps (118).

**10.** A water vehicle in accordance with one of the preceding claims, characterized in that the bottom of the transition region (117) extends at an angle of 20 to 40° to the horizontal from the exterior towards the interior.

**11.** A water vehicle in accordance with one of the preceding claims, characterized in that the inner walls (119) of the lower displacement mode float region (115) located below the water line (WLO) during travel in the displacement mode extend substantially parallel to one another from the stem to the stern.

**12.** A water vehicle in accordance with one of claims 1 to 10, characterized in that the inner walls (119) of the lower displacement mode float region (115) extend from the exterior conically slightly inwardly towards each other and extend thereafter substantially parallel to each other up to the stern.

**13.** A water vehicle in accordance with one of the preceding claims, characterized in that the keel line of the floats (111) rises slightly from the stem to the stern.

**14.** A water vehicle in accordance with one of the preceding claims, characterized in that the floats (111) are subdivided by at least one deck (121, 121') into buoyancy chambers which are sealed relative to one another.

**15.** A water vehicle in accordance with claim 14, characterized in that a deck (121') for the subdivision of two buoyancy chambers located above and sealed relative to one another is located in the transition region (117) from the lower displacement mode float region (115) to the hull section (112).

**16.** A water vehicle in accordance with one of the preceding claims, characterized in that the main propulsion units (114) and optionally also the fan drive units (116) are constructed as containers which are suspended at their top side on the deck structure (113) and/or float structure and at their lower side are merely braced sideways and in the longitudinal direction against the structure of the floats.

**17.** A water vehicle in accordance with one of the preceding claims, characterized in that the exhaust ducts (122) of the combustion engines for the main propulsion units (114), and/or for the fan drive units (116), as well as of any generators, open into the air space (125) bounded by the floats (111) and the skirts (123, 124) which is located above the water surface, with the air cushion pressure being smaller or the same as the exhaust gas pressure of the exhaust ducts (122).

**18.** A water vehicle in accordance with one of the preceding claims, characterized in that stabilizer fins (126) which are pivotable about transverse axes (127) are arranged in the lower end region of the floats (111) at the inside, with the stabilizer fins being so controlled that they assist the transition from travel in the displacement mode into the air cushion mode and/or assist the exceeding of a critical speed range during travel in the hovercraft mode at higher speeds.

**19.** A water vehicle in accordance with claim 18, characterized in that a pair of stabilizer fins (126) is provided at the stem.

**20.** A water vehicle in accordance with claim 19, characterized in that a further pair of stabilising fins are provided int he stern region of the floats (111).

**21.** A water vehicle in accordance with one of the preceding claims, characterized in that a telescopically extendable and retractable column (129), carrying a sonar device (128) at its lower end is arranged on the deck structure (113) between the floats (111), with the lower end of the column extending in the retracted state to approximately below the water line during travel in the displacement mode (WLO).

**22.** A water vehicle in accordance with claim 21, characterized in that a stabilising fin arrangement (130) is provided at the lower end region of the retracted column (129) which lies below the water line (WLO) during travel in the displacement mode.

23. A water vehicle in accordance with one of the claims 21 or 22, characterized in that the stroke (H) of the sonar device (128) is larger than the height difference between travel in the displacement mode and travel in the hovercraft mode.

24. A water vehicle in accordance with one of the claims 21, 22 or 23, characterized in that the sonar device (128) is mounted angularly adjustable at the lower end of the column (129).

25. A water vehicle in accordance with one of the preceding claims, characterized in that the stem and/or stern skirts (123; 124) can be moved out of their operation position for travel in the hovercraft mode, to such an extent, that during travel in the displacement mode they no longer or only unimportantly contact the water surface, at least in calm water.

26. A water vehicle in accordance with one of the preceding claims, characterized in that the stem skirt (123) can be upwardly pivoted to such an extent that it does not project in the air space (125) between the bottom (139) of the deck structure (113) and the water line (WLO) during travel in the displacement mode.

27. A water vehicle in accordance with claim 25 or 26, characterized in that the stem skirt (123) is formed by resilient pockets (13) arranged next to each other, which are folded rearwardly and rounded at the front, which are secured at the top to the deck structure (113) and which are optionally flowed over by the lift air from above during travel in the hovercraft mode; and in that pivot arms (132) which extend substantially from the top downwardly are secured in the front region of the pockets (131), are pivotable rearwardly about an upper transverse shaft (133) and, on being pivoted, pivot the regions of the resilient pockets (131) which come into contact with the water surface during travel in the displacement mode upwardly away from the water surface.

28. A water vehicle in accordance with claim 25 or 26, characterized in that the stem skirt (123) is formed by resilient pockets (131) arranged next to each other, which are folded rearwardly and rounded at the front, which are secured at the top to the deck structure (113) and which are optionally flowed over by the lift air from above during travel in the hovercraft mode; and in that on being upwardly pivoted the upper mounting of the pockets (131) remains unchanged and the pockets (131) are resiliently deformed.

29. A water vehicle in accordance with one of the claims 25 to 28, characterized in that a chamber (134) is provided above the front skirt (123) for accomodating the elevated skirt (123).

30. A water vehicle in accordance with one of the claims 25 to 29, characterized in that the stern skirt (124) extends into lateral internal recesses (136) of the floats (111), with the side end faces of the stern skirt (124) being optionally sealed relative to the sidewalls of the recesses (136).

31. A water vehicle in accordance with one of the claims 25 to 30, characterized in that the stern skirt (124) consists of resilient pockets (137) which extend parallel to one another and are arranged substantially behind one another, the pockets (137) being connected to a source of air pressure and are selectively inflated or relieved of pressure.

32. A water vehicle in accordance with one of the claims 25 to 31, characterized in that the skirts (123, 124) can be moved into and fixed in intermediate positions between the position for travel in the pure displacement mode and their active position for travel in the hovercraft mode.

**Revendications**

1. Véhicule à coussin d'air du type catamaran, comprenant deux flotteurs (111) s'étendant dans le sens de déplacement, disposés parallèlement l'un à l'autre et à distance l'un de l'autre, qui comprennent chacun une région de flotteur (115) qui est immergée lors de la navigation en flottaison et définit une ligne d'eau en flottaison (WLO), la section transversale des flotteurs allant en s'élargissant depuis le bas vers le haut, et les flotteurs étant reliés rigidement l'un à l'autre par le haut au moyen d'une structure de pont (113), le véhicule comprenant à la proue et à la poupe des jupes (123, 124) élastiques disposées entre les flotteurs qui s'étendent au moins jusqu'au voisinage de la surface de l'eau et délimitent avec les flotteurs un compartiment à air (125) entre le plancher de la structure de pont et la surface de l'eau, des unités motrices principales (114) qui entrainent des organes de propulsion (148) disposés dans la région de poupe des flotteurs, et des ventilateurs (116) qui soufflent de l'air aspiré à l'extérieur dans le compartiment à air délimité au dessous du plancher de la structure de pont afin de soulever le véhicule à partir du mode de navigation en flottaison jusqu'au mode de navigation sur coussin d'air et donc jusqu'à la ligne d'eau en navigation sur coussin d'air, les flotteurs présentant un élargissement s'étendant de façon prononcée vers l'intérieur au moins le long d'une fraction importante de leur longueur totale, ledit élargissement étant formé par une excroissance de réception (112) ayant une zone de transition (117) et servant à recevoir les unités motrices principales, et la structure de pont étant montée sur la zone d'extrémité supérieure de l'excroissance de réception, caractérisé en ce que la zone de transition (117) vers l'excroissance de réception (112) commence à la manière d'un gradin au dessus de la ligne d'eau en flottaison (WLO) et définit un gradin prononcé.

2. Véhicule selon la revendication 1, caractérisé en ce que l'excroissance de réception (112) qui comporte la zone de transition en gradin (117) s'étend au dessus de la ligne d'eau en flottaison (WLO) presque sur toute la longueur du bateau et, outre les unités motrices principales (114), reçoit d'autres organes tels que les unités d'entraînement des ventilateurs (116), des générateurs électriques, des installations de climatisation, des unités de traitement d'eau.

3. Véhicule selon la revendication 1 ou 2, caractérisé en ce que l'excroissance de réception (112) qui comporte la zone de transition en gradin (117) possède sa plus forte largeur au milieu de la longueur du bateau et que les unités motrices principales sont placées à ce niveau-là.

4. Véhicule selon la revendication 3, caractérisé en ce que la zone de transition (117) commence seulement à une certaine distance de la poupe et en ce que sa largeur augmente constamment en direction de l'arrière jusqu'à atteindre la plus forte largeur.

5. Véhicule selon la revendication 3 ou 4, caractérisé en ce que la zone de transition (117) et donc l'excroissance de réception (112) conserve pratiquement sa plus forte largeur vers l'arrière.

6. Véhicule selon l'une des revendications précédentes, caractérisé en ce que à la moitié de la longueur du bateau, la hauteur du talon de réception (112) qui présente la zone de transition (117) est de 0,8 à 1,2 fois la hauteur de la région inférieure (115) de flotteur immergée située au dessous de la ligne d'eau en flottaison (WLO).

7. Véhicule selon l'une des revendications précédentes, caractérisé en ce que à la moitié de la longueur du bateau, la zone de transition (117) a une taille telle que la largeur de chaque flotteur (111) augmente de 30 à 70 % au passage depuis la région inférieure (115) immergée en flottaison vers l'excroissance de réception (112).

8. Véhicule selon l'une des revendications précédentes, caractérisé en ce que le fond de la zone de transition (117) est légèrement arrondi ou s'étend en oblique.

9. Véhicule selon l'une des revendications précédentes, caractérisé en ce que les flotteurs (111) s'élargissent vers l'extérieur pratiquement constamment ou en petits gradins (118).

10. Véhicule selon l'une des revendications précédentes, caractérisé en ce que le fond de la zone de transition (117) s'étend en montant depuis l'extérieur vers l'intérieur sous un angle de 20 à 40$^\circ$ par rapport à l'horizontale.

11. Véhicule selon l'une des revendications précédentes, caractérisé en ce que les parois intérieures (119) de la région inférieure (115) immergée en flottaison, situées au-dessous de la ligne d'eau en flottaison (WLO), s'étendent pratiquement parallèles l'une à l'autre de la proue à la poupe.

12. Véhicule selon l'une des revendications 1 à 10, caractérisé en ce que les parois intérieures (119) de la région inférieure (115) immergée en flottaison s'étendent depuis l'extérieur vers l'intérieur de façon légèrement conique l'une en direction de l'autre dans la région avant du bateau et, à la suite, s'étendent pratiquement parallèlement l'une à l'autre jusqu'à la poupe.

13. Véhicule selon l'une des revendications précédentes, caractérisé en ce que la ligne de quille des flotteurs (111) va légèrement en montant depuis la proue jusqu'à la poupe.

14. Véhicule selon l'une des revendications précédentes, caractérisé en ce que les flotteurs (111) sont subdivisés en caissons de portance étanches les uns par rapport aux autres au moyen d'au moins un pont (121, 121').

15. Véhicule selon la revendication 14, caractérisé en ce qu'il est prévu un pont (121') de subdivision de deux caissons de portance superposés dans la zone de transition (117) depuis la région inférieure (115) immergée en flottaison vers l'excroissance de réception supérieure (112).

16. Véhicule selon l'une des revendications précédentes, caractérisé en ce que les unités motrices principales (114), et le cas échéant les organes d'entraînement de ventilateurs (116) sont réalisés sous forme de conteneurs qui sont suspendus par leur face supérieure à la structure de pont (113) et/ou à la structure des flotteurs et reposent à leur face inférieure simplement latéralement et en direction longitudinale sur la structure des flotteurs.

17. Véhicule selon l'une des revendications précédentes, caractérisé en ce que les conduits d'échappement (122) des unités motrices principales (114) et/ou des unités d'entraînement des ventilateurs (116) ainsi que d'éventuels générateurs débouchent dans le compartiment à air (125) délimité par les flotteurs (111) et les jupes (123, 124) au-dessus de la surface de l'eau, la pression du coussin d'air étant inférieure ou égale à la pression de refoulement des conduits d'échappement (122).

18. Véhicule selon l'une des revendications précédentes, caractérisé en ce que des plans de stabilisation (126) pivotants autour d'axes transversaux (127) sont agencés à l'intérieur dans la région d'extrémité inférieure des flotteurs (111), ces plans pouvant être commandés de telle manière à assister la transition depuis la navigation en flottaison vers la navigation sur coussin d'air et/ou le passage d'une plage de vitesse critique au cours de la navigation sur coussin d'air à vitesse supérieure.

19. Véhicule selon la revendication 18, caractérisé en ce qu'il est prévu une paire de plans de stabilisation (126) à l'avant.

20. Véhicule selon la revendication 19, caractérisé en ce qu'il est prévu une autre paire de plans de stabilisation dans la région de poupe des flotteurs (111).

21. Véhicule selon l'une des revendications précédentes, caractérisé en ce qu'une colonne (129), qui peut être déployée et rétractée téléscopiquement et porte à son extrémité inférieure un appareil sonar (128), est montée sur la structure de pont (113) entre les flotteurs (111), l'extrémité inférieure de ladite colonne s'étendant en condition rétractée environ jusqu'en-dessous de la ligne d'eau en navigation en flottaison (WLO).

22. Véhicule selon la revendication 21, caractérisé en ce que des plans de stabilisation (130) sont prévus dans la région de la colonne (129) rétractée située au-dessous de la ligne d'eau en flottaison (WLO).

23. Véhicule selon la revendication 21, caractérisé en ce que la course (H) de la colonne (129) déployable et rétractable téléscopiquement est supérieure à la différence de hauteur entre la navigation en flottaison et la navigation sur coussin d'air.

24. Véhicule selon l'une des revendications 21, 22 ou 23, caractérisé en ce que l'appareil sonar (128) peut être ajusté angulairement et est monté à l'extrémité inférieure de la colonne (129).

25. Véhicule selon l'une des revendications précédentes, caractérisé en ce que la jupe de proue et/ou de poupe (123; 124) peut être déplacée par rapport à sa position de fonctionnement en coussin d'air aussi loin qu'elle ne touche plus ou pratiquement plus la surface de l'eau lors de la navigation en flottaison et au moins par mer calme.

26. Véhicule selon l'une des revendications précédentes, caractérisé en ce que la jupe avant (123) peut être basculée vers le haut aussi loin qu'elle ne dépasse plus dans le compartiment à air (125) entre le plancher (139) de la structure de pont (113) et la ligne d'eau en flottaison (WLO).

27. Véhicule selon l'une des revendications 25 ou 26, caractérisé en ce que la jupe avant (123) est formée de poches (131) élastiques arrondies à l'avant et repliées à l'arrière et agencées les unes à côté des autres, qui sont fixées en haut à la structure de pont (113) et le long desquelles s'écoule éventuellement le flux d'air soufflé depuis le haut en navigation sur coussin d'air, et en ce que des bras de pivotement (132) s'étendant généralement du haut vers le bas sont fixés dans la région avant des poches (131), lesdits bras pouvant être pivotés vers l'avant autour d'un arbre transversal supérieur (133) et lors de leur pivotement basculent en éloignement de la surface de l'eau les régions des poches élastiques (131) qui viennent en contact avec la surface de l'eau lors de la navigation en flottaison.

28. Véhicule selon l'une des revendications 25 ou 26, caractérisé en ce que la jupe avant (123) est formée de poches (131) élastiques arrondies à l'avant et repliées à l'arrière et agencées les unes à côté des autres, qui sont fixées en haut à la structure de pont (113) et le long desquelles s'écoule éventuellement le flux d'air soufflé depuis le haut en navigation sur coussin d'air, et en ce que lors du pivotement vers le haut la fixation supérieure des poches (131) reste sans modification et les poches (131) sont déformées élastiquement.

29. Véhicule selon l'une des revendications 25 à 28, caractérisé en ce qu'il est prévu au dessus de la jupe avant (123) un compartiment de rangement (134) pour la jupe avant (123) en position relevée.

30. Véhicule selon l'une des revendications 25 à 29, caractérisé en ce que la jupe arrière (124) s'étend jusque dans des évidements internes (136) des flotteurs (111) et le cas échéant les côtés latéraux de la jupe arrière (124) sont rendus étanches par rapport aux parois des évidements (136).

31. Véhicule selon l'une des revendications 25 à 30, caractérisé en ce que la jupe arrière est constituée de poches élastiques (137) placées généralement les unes derrière les autres et s'étendant parallèlement les unes par rapport aux autres, lesdites poches étant raccordées à une source d'air sous pression et étant sélectivement mises sous pression ou déchargées.

32. Véhicule selon l'une des revendications 25 à 31, caractérisé en ce que les jupes (123, 124) peuvent être amenées et maintenues en position intermédiaire entre leur position de fonctionnement en coussin d'air et une position de navigation en pure flottaison.

FIG. 1

FIG. 2

FIG. 3

EP 0 182 314 B1

FIG. 4

EP 0 182 314 B1

FIG. 5

FIG. 6

EP 0 182 314 B1

FIG. 7

EP 0 182 314 B1

# FIG. 8

# FIG. 9